# EUROPEAN PATENT SPECIFICATION

(11) **EP 2 645 455 B1**
(45) Date of publication and mention of the grant of the patent: **15.01.2025**
(21) Application number: 13161704.5
(22) Date of filing: 28.03.2013
(51) Int. Cl.: H01M 4/36, H01M 4/485, H01M 4/587, H01M 4/62, H01M 4/38, H01M 4/505, H01M 4/525, H01M 10/052, H01M 10/0525, H01M 4/02

(54) **Composite electrode active material, electrode and lithium battery containing the composite electrode active material, and method of preparing the composite electrode active material**
Verbundstoff- Elektrodenaktivmaterial, Elektrode und Lithiumbatterie mit dem Verbundstoff-Elektrodenaktivmaterial und Verfahren zur Herstellung des Verbundstoff-Elektrodenaktivmaterials
Matériau actif d'électrode composite, électrode et batterie au lithium contenant ledit matériau actif d'électrode composite et procédé de préparation de la matière active d'électrode composite

(30) Priority: 28.03.2012 KR 20120031815
(43) Date of publication of application: 02.10.2013
(73) Proprietor: Samsung SDI Co., Ltd., Yongin-si, Gyeonggi-do (KR)
(72) Inventor: SHEEM, Kyeu-Yoon, Gyeonggi-do (KR); YI, Jeong-Doo, Gyeonggi-do (KR); JO, Hyun-Uk, Gyeonggi-do (KR); HAN, Da-Un, Gyeonggi-do (KR)
(74) Representative: Taor, Simon Edward William

(56) References cited:
- EP-A1- 2 131 422
- WO-A1-2009/105863
- WO-A1-2010/053222
- US-A1- 2008 145 757
- US-A1- 2012 034 522
- US-A1- 2012 040 244
- YAN YU ET AL: "Tin Nanoparticles Encapsulated in Porous Multichannel Carbon Microtubes: Preparation by Single-Nozzle Electrospinning and Application as Anode Material for High-Performance Li-Based Batteries", JOURNAL OF THE AMERICAN CHEMICAL SOCIETY, vol. 131, no. 44, 11 November 2009 (2009-11-11), pages 15984 - 15985, XP055085337, ISSN: 0002-7863, DOI: 10.1021/ja906261c

## Description

One or more embodiments relate to a composite electrode active material, an electrode and a lithium battery containing the composite electrode active material, and a method of preparing the composite electrode active material

Lithium batteries are used in various applications due to their high-voltage and high-energy density. For example, electric vehicles (e.g. hybrid electric vehicles (HEVs), plug-in hybrid electric vehicles (PHEVs), etc.) should charge and discharge a lot of electricity at a short period of time and use a lot of electricity over a long period of time, thus a lithium battery having excellent high-rate discharging and charging characteristics and lifespan is necessary.

An electrode active material that is used in a lithium battery includes a positive electrode active material and a negative electrode active material. For example, the negative electrode active material may be a carbonaceous material, and the positive electrode active material may be a lithium transition metal oxide.

WO2010053222 discloses a cathode active material for a lithium secondary battery that includes a lithium metal oxide secondary particle core formed by agglomerating lithium metal oxide primary particles; and a shell formed by coating the secondary particle core with barium titanate and metal oxide.

EP2131422 discloses a positive electrode forming material for a positive electrode of a battery, the material including particles of a positive electrode active material and fine carbon fibers adhering to surfaces of particles of the positive electrode active material in a shape of a network.

US2012040244 discloses an anode composition for a lithium secondary battery includes an anode active material, a binder, and a conductive material. The active material includes a plurality of anode active material particles, each of which includes a core made of metal or metalloid allowing alloying or dealloying with lithium, or a compound containing the metal or metalloid; and a shell formed at an outer portion of the core and having Ketjen black.

US2012034522 discloses an active material for a rechargeable lithium battery and a rechargeable battery, the active material including an active material core; and a thin film graphite layer on the core.

WO2009105863 discloses a composite electrode material consisting of a carbon coated complex oxide, fibrous carbon and a binder. This material is prepared by a method which comprises co-grinding an active electrode material and fibrous carbon, and adding a binder to the co-grinded mixture to lower the viscosity of the mixture. The fibrous carbon is preferably vapor grown carbon fibers.

XP55085337 discloses tin nanoparticles encapsulated in porous multichannel carbon microtubes. The tin nanoparticles encapsulated is prepared by single-nozzle electrospinning.

US20080145757 discloses a porous anode active material which includes fine particles of metallic substance capable of forming a lithium alloy.

In lithium batteries including a conventional electrode active material, a concentration of lithium ions around the electrode active material may be rapidly consumed by an electrode side reaction during charging and discharging at high rate. Accordingly, efficiency of the electrode reaction may be decreased, and thus the batteries may deteriorate. As a result, high-rate characteristics and lifespan of the lithium batteries are adversely affected.

Therefore, a lithium battery with improved high-rate characteristics and improved lifespan is of interest.

Some embodiments provide a composite electrode active material comprising a core capable of intercalating and deintercalating lithium; and a coating layer formed on at least a part of a surface of the core, wherein the coating layer comprises a porous carbonaceous material.

Some embodiments provide an electrode containing a composite electrode active material as disclosed and described herein.

Some embodiments provide a lithium battery containing an electrode as disclosed and described herein.

Some embodiments provide a method of preparing a composite electrode active material as disclosed and described herein.

Additional aspects of the embodiments will be set forth in part in the description which follows and, in part, will be apparent from the description, or may be learned by practice of the exemplary embodiments.

According to one or more embodiments of the present disclosure, a composite electrode active material may include a core and a coating layer formed on at least a part of the core, wherein the coating layer includes a porous carbonaceous material.

According to one or more embodiments of the present invention, an electrode includes the composite electrode active material including a core and a coating layer formed on at least a part of the core, wherein the coating layer includes a porous carbonaceous material.

According to one or more embodiments of the present invention, a lithium battery includes the electrode including the composite electrode active material including a core and a coating layer formed on at least a part of the core, wherein the coating layer includes a porous carbonaceous material.

According to one or more embodiments of the present disclosure, a method of preparing a composite electrode active material includes mixing a core capable of intercalating and deintercalating lithium and a porous carbonaceous material; and forming a coating layer comprising the porous carbonaceous material on at least a part of a surface of the core.

According to an aspect of the invention, there is provided a composite electrode active material as set out in claim 1. Preferred features of this aspect are set out in claims 2 to 7.

According to another aspect of the invention, there is provided an electrode as set out in claim 8.

According to another aspect of the invention, there is provided a lithium battery as set out in claim 9.

According to another aspect of the invention, there is provided a method of preparing a composite electrode active material as set out in claim 10. Preferred features of this aspect are set out in claims 11 to 13.

These and/or other aspects will become apparent and more readily appreciated from the following description of the embodiments, taken in conjunction with the accompanying drawings of which:
FIG. 1A is a scanning electron microscope (SEM) image of porous carbon fibers prepared in Preparation Example 1;
FIG. 1B is a magnified image of FIG. 1A;
FIG. 1C is a SEM image of a cross-sectional view of the porous carbon fiber prepared in Preparation Example 1; and
FIG. 2 is a schematic view of a lithium battery according to an embodiment of the present invention.

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, one or more embodiments of a composite electrode active material, an electrode and a lithium battery each including the composite electrode active material, and a method of preparing the composite electrode active material will be described in greater detail.

A composite electrode active material according to an embodiment of the present disclosure may include a core capable of intercalating and deintercalating lithium ions, and a coating layer formed on the core, wherein the coating layer may include a porous carbonaceous material.

In certain embodiments, a very large interface in contact with an electrolyte may be formed on the composite electrode active material since the composite electrode active material includes the porous carbonaceous coating layer. In certain embodiments, a high concentration of the lithium ions may be obtained around the composite electrode active material when an electric double layer is formed on the interface. Therefore, a change in the concentration of the lithium ions around the composite electrode active material may not be significant during high-rate charging and discharging of the lithium battery, and thus an increase in diffusion path of the lithium ions may be suppressed. In certain embodiments, high-rate characteristics of the lithium battery may be improved when including a composite electrode active material as disclosed and described herein. In certain embodiments, the composite electrode active material may include a large amount of the electrolyte, and thus a side reaction due to local electrolyte shortage may be prevented, and lifespan of the lithium battery may be improved.

In certain embodiments, the coating layer may be formed on a part of the core. For example, the coating layer may be formed as an island type on the core. In certain embodiments, the coating layer may be formed on the entire surface of the core. For example, the coating layer may be formed to completely cover the core.

In certain embodiments, a BET specific surface area of the porous carbonaceous material in the composite electrode active material may be three (3) times greater than that of the core. In certain embodiments, a BET specific surface area of the porous carbonaceous material may be three (3) times to 1500 times greater than that of the core. In certain embodiments, a BET specific surface area of the porous carbonaceous material may be 10 times to 1500 times greater than that of the core. In certain embodiments, a BET specific surface area of the porous carbonaceous material may be 100 times to 1500 times greater than that of the core. In certain embodiments, a large interface with the electrolyte may be obtained as the porous carbonaceous material has a larger specific surface area compared to the core.

In certain embodiments, the specific surface area of the porous carbonaceous material which is measured using a BET measuring method may be 2500 m²/g or less. In certain embodiments, the BET specific surface area of the porous carbonaceous material may be about 10 m²/g to about 2500 m²/g. In certain embodiments, a BET specific surface area of the porous carbonaceous material may be about 100 m²/g to about 2500 m²/g. In certain embodiments, a large interface with the electrolyte may be obtained as the porous carbonaceous material has a larger specific surface area compared to the core.

In certain embodiments, an interlayer spacing d₀₀₂ of the porous carbonaceous material may be 0.33 nm or greater. In certain embodiments, the porous carbonaceous material may be amorphous carbon with an interlayer spacing d₀₀₂ of 0.335 nm or greater. In certain embodiments, the porous carbonaceous material may be amorphous carbon with an interlayer spacing d₀₀₂ of about 0.335 nm to about 0.400 nm.

In certain embodiments, the porous carbonaceous material may include a plurality of irregular pores therein. In certain embodiments, the porous carbonaceous material may have a large specific surface area by including a plurality of pores that are three-dimensionally distributed in the porous carbonaceous material. In certain embodiments, the pores may be interconnected and may form a plurality of channels.

The porous carbonaceous material includes nano-sized pores therein. In certain embodiments, a surface that is in contact with the electrolyte may be significantly increased by including the nano-sized pores in the porous carbonaceous material.

In certain embodiments, the porous carbonaceous material in the composite electrode active material may be a fiber-like shape having an aspect ratio that is 3 or greater or a particle-like shape having an aspect ratio that is less than 3. In certain embodiments, the porous carbonaceous material according to the current embodiment of the present invention may be one selected from the group consisting of porous carbon fibers, activated carbon, carbide derived carbon (CDC), mesoporous carbon, carbon nano-tubes, and graphene.

A content of the porous carbonaceous material in the composite electrode active material is 0.1 to 20 wt % based on the total weight of the composite electrode active material. In certain embodiments, a content of the porous carbonaceous material in the composite electrode active material may be 0.5 to 15 wt % based on the total weight of the composite electrode active material. In certain embodiments, a content of the porous carbonaceous material in the composite electrode active material may be 1 to 10 wt % based on the total weight of the composite electrode active material. In certain embodiments, further improved charge/discharge characteristics may be obtained when a content of the porous carbonaceous material is within the ranges above.

In certain embodiments, the core particles in the composite electrode active material have a diameter of about 1 µm to about 50 µm. In certain embodiments, the core particles may have a diameter of about 5 µm to about 20 µm.

In certain embodiments, the coating layer in the composite electrode active material may have a thickness of about 1 nm to about 10 µm, but is not limited thereto. A thickness of the coating layer may be appropriately adjusted within a range in which charge/discharge characteristics of the lithium battery may be improved.

In certain embodiments, the composite electrode active material may comprise composite electrode active material particles that comprise the coated core particles, with the composite electrode active material particles having a diameter of about 1 µm to about 1000 µm. In certain embodiments, the composite electrode active material particles may have a diameter of about 1 µm to about 100 µm. In certain embodiments, the composite electrode active material particles may have a diameter of about 1 µm to about 50 µm. In certain embodiments, the composite electrode active material particles may have a diameter of about 5 µm to about 20 µm. However, a diameter of the composite electrode active material particles is not limited to the ranges above, and any size that is available in the art may be used. In certain embodiments, the composite negative electrode active material may have particles having a shape that may be spherical, oval, or the like, but is not limited thereto and may have a non-spherical shape.

In certain embodiments, the core in the composite electrode active material may include a negative electrode active material. For example, the core may include a carbonaceous material. In certain embodiments, the carbonaceous material may be crystalline carbon, amorphous carbon, or a mixture thereof. In certain embodiments, the carbonaceous material may include one or more selected from the group consisting of natural graphite, artificial graphite, soft carbon, and hard carbon. In certain embodiments, the crystalline carbon may be graphite such as shapeless, plate, flake, spherical, or fibrous natural graphite or artificial graphite, and the amorphous carbon may be soft carbon (low-temperature fired carbon) or hard carbon, mesophase pitch carbide, fired coke, etc.

In certain embodiments, the negative electrode active material may include one or more selected from the group consisting of a lithium metal, a metal alloyable with lithium, a transition metal oxide, and a non-transition metal oxide. Any appropriate negative electrode active material available in the art may be used.

In certain embodiments, the negative electrode active material may be a tin-based active material, a silicon-based compound, a silicon alloy, an oxide-based active material, or the like.

In certain embodiments, the metal alloyable with lithium may be Si, Sn, Al, Ge, Pb, Bi, Sb, a Si-**Y** alloy (where **Y** is an alkaline metal, an alkaline earth metal, a group 13 element, a group 14 element, a transition metal, a rare earth element, or a combined element thereof, and is not Si), a Sn-Y alloy (where **Y** is an alkaline metal, an alkaline earth metal, a group 13 element, a group 14 element, a transition metal, a rare earth element, or a combined element thereof, and is not Sn), or the like. In certain embodiments, the element **Y** may be Mg, Ca, Sr, Ba, Ra, Sc, Y, Ti, Zr, Hf, Rf, V, Nb, Ta, Cr, Mo, W, Tc, Re, Fe, Pb, Ru, Os, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

In certain embodiments, the transition metal oxide may be a lithium titanium oxide, a vanadium oxide, a lithium vanadium oxide, or the like.

In certain embodiments, the non-transition metal oxide may be SnO₂, SiOₓ(0<**x**<2), or the like.

In certain embodiments, the core in the composite electrode active material may include a positive electrode active material. In certain embodiments, the positive electrode active material may include a lithium transition metal oxide. Any appropriate lithium transition metal oxide available in the art may be used.

In certain embodiments, the positive electrode active material may include one or more selected from the group consisting of a lithium cobalt oxide, a lithium nickel cobalt manganese oxide, a lithium nickel cobalt aluminum oxide, a lithium iron phosphate, and a lithium manganese oxide, but is not limited thereto, and any appropriate positive electrode active material available in the art may be used.

In certain embodiments, the positive electrode active material may be a compound represented by one of the following chemical formulae:

Li**ₐA**₁₋**_{b}B¹_{b}D¹**₂ (where 0.90 ≤ **a** ≤ 1.8, and 0 ≤ **b** ≤ 0.5);

Li**ₐE**₁₋**_{b}B¹_{b}**O₂₋**_{c}D¹_{c}** (where 0.90 ≤ **a** ≤ 1.8, 0 ≤ **b** ≤ 0.5, and 0 ≤ **c** ≤ 0.05);

LiE₂**_{-b}B¹_{b}**O₄₋**_{c}D¹_{c}** (where 0 ≤ **b** ≤ 0.5, and 0 ≤ **c** ≤ 0.05);

Li**ₐ**Ni_{1-**b-c**}Co**_{b}B¹_{c}D¹_{α}** (where 0.90 ≤ **a** ≤ 1.8, 0 ≤ **b** ≤ 0.5, 0 ≤ **c** ≤ 0.05, and 0 < **α** ≤ 2);

Li**ₐ**Ni_{1-**b**-c}Co**_{b}B¹_{c}**O₂₋**_{α}F¹_{α}** (where 0.90 ≤ **a** ≤ 1.8, 0 ≤ **b** ≤ 0.5, 0 ≤ **c** ≤ 0.05, and 0 < **α** < 2);

Li**ₐ**Ni_{1-**b-c**}Co**_{b}B¹_{c}**O₂₋**_{α}F¹**₂ (where 0.90 ≤ **a** ≤ 1.8, 0 ≤ **b** ≤ 0.5, 0 ≤ **c** ≤ 0.05, and 0 < **α** < 2);

Li**ₐ**Ni_{1-**b-c**}Mn**_{b}B¹_{c}D¹_{α}** (where 0.90 ≤ **a** ≤ 1.8, 0 ≤ **b** ≤ 0.5, 0 ≤ **c** ≤ 0.05, and 0 < **α** ≤ 2);

Li**ₐ**Ni_{1-**b-c**}Mn**_{b}B¹_{c}**O₂₋**_{α}F¹_{α}** (where 0.90 ≤ **a** ≤ 1.8, 0 ≤ **b** ≤ 0.5, 0 ≤ **c** ≤ 0.05, and 0 < **α** < 2);

Li**ₐ**Ni_{1-**b-c**}Mn**_{b}B¹_{c}**O₂₋**_{α}F¹**₂ (where 0.90 ≤ **a** ≤ 1.8, 0 ≤ **b** ≤ 0.5, 0 ≤ **c** ≤ 0.05, and 0 < **α** < 2);

Li**ₐ**Ni**_{b}E_{c}G_{d}**O₂ (where 0.90 ≤ **a** ≤ 1.8, 0 ≤ **b** ≤ 0.9, 0 ≤ **c** ≤ 0.5, and 0.001 ≤ **d** ≤ 0.1);

Li**ₐ**Ni**_{b}**Co**_{c}**Mn**_{d}**GeO₂ (where 0.90 ≤ **a** ≤ 1.8, 0 ≤ **b** ≤ 0.9, 0 ≤ **c** ≤ 0.5, 0 ≤ **d** ≤0.5, and 0.001 ≤ **e** ≤ 0.1);

LiₐNi**G**_{b}O₂ (where 0.90 ≤ a ≤ 1.8, and 0.001 ≤ **b** ≤ 0.1); LiₐCo**G_{b}**O₂ (where 0.90 ≤ **a** ≤ 1.8, and 0.001 ≤ **b** ≤ 0.1);

LiₐMn**G_{b}**O₂ (where 0.90 ≤ **a** ≤ 1.8, and 0.001 ≤ **b** ≤ 0.1); LiₐMn₂**G_{b}**O₄ (where 0.90 ≤ **a** ≤ 1.8, and 0.001 ≤ **b** ≤ 0.1);

**Q**O₂; **Q**S₂; Li**Q**S₂; V₂O₅; LiV₂O₅; Li**I¹**O₂; LiNiVO₄; Li_{(3-**f**)}**J**₂(PO₄)₃(0 ≤ **f** ≤ 2);

Li_{(3-**f**)}Fe₂(PO₄)₃(0 ≤ **f** ≤ 2); and LiFePO₄.

In the formulae above, **A** is selected from the group consisting of nickel (Ni), cobalt (Co), manganese (Mn), and combinations thereof; **B¹** is selected from the group consisting of aluminum (Al), nickel (Ni), cobalt (Co), manganese (Mn), chromium (Cr), iron (Fe), magnesium (Mg), strontium (Sr), vanadium (V), a rare earth element, and combinations thereof; **D¹** is selected from the group consisting of oxygen (O), fluorine (F), sulfur (S), phosphorus (P), and combinations thereof; **E** is selected from the group consisting of cobalt (Co), manganese (Mn), and combinations thereof; **F¹** is selected from the group consisting of fluorine (F), sulfur (S), phosphorus (P), and combinations thereof; **G** is selected from the group consisting of aluminum (Al), chromium (Cr), manganese (Mn), iron (Fe), magnesium (Mg), lanthanum (La), cerium (Ce), strontium (Sr), vanadium (V), and combinations thereof; **Q** is selected from the group consisting of titanium (Ti), molybdenum (Mo), manganese (Mn), and combinations thereof; **I¹** is selected from the group consisting of chromium (Cr), vanadium (V), iron (Fe), scandium (Sc), yttrium (Y), and combinations thereof; and **J** is selected from the group consisting of vanadium (V), chromium (Cr), manganese (Mn), cobalt (Co), nickel (Ni), copper (Cu), and combinations thereof.

One of the compounds listed above as positive electrode active materials may have a coating layer on a surface of the compound, or a mixture of a compound without a coating layer and a compound having a coating layer, the compound being selected from the compounds listed above, may be used. In certain embodiments, the coating layer may include a coating element compound of an oxide, hydroxide, oxyhydroxide, oxycarbonate, or hydroxycarbonate of the coating element. In certain embodiments, the compounds for the coating layer may be amorphous or crystalline. In certain embodiments, the coating element for the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or mixtures thereof. In certain embodiments, the coating layer may be formed using any method that does not adversely affect the physical properties of the positive electrode active material when a compound of the coating element is used. In certain embodiments, the coating layer may be formed using a spray coating method, a dipping method, or the like. This will be understood to those of ordinary skill in the art.

In certain embodiments, LiNiO₂, LiCoO₂, LiMnₓO₂ₓ (where **x** = 1, 2), LiNi₁₋ₓMnₓO₂ (where 0 < **x** < 1), LiNi_{1-x-y}CoₓMn_{y}O₂ (where 0 ≤ **x** ≤ 0.5, 0 ≤ **y** ≤ 0.5), LiFeO₂, V₂O₅, TiS, MoS, or the like may be used.

In certain embodiments, the lithium transition metal oxide may have a spinel structure or a layered structure. In certain embodiments, the lithium transition metal oxide may be a single composition or a composite of two or more compounds having different compositions. In certain embodiments, the lithium transition metal oxide may be a composite of two or more compounds having a layered structure. In certain embodiments, the lithium transition metal oxide may be a composite of a compound having a layered structure and a compound having a spinel structure.

In certain embodiments, the lithium transition metal oxide may include an overlithiated oxide (OLO) or a lithium transition metal oxide having an average driving potential of 4.3 V or higher. In certain embodiments, an average driving potential of the lithium transition metal oxide may be about 4.3 V to about 5.0 V.

The average driving potential means a quantity of charge/discharge electric energy divided by a quantity of charge/discharge electricity when a battery is charged/discharged between an upper limit and a lower limit of the recommended charge/discharge potential of the battery.

In certain embodiments, the core may include a compound, for example, represented by Formula 1 or Formula 2 below:

Formula 1 Li[Li**ₐMe**_{1-**a**}]O_{2+**d**}

Formula 2 Li[Li**_{b}Me_{c}M'ₑ**]O_{2+**d**}

In Formula 1 or Formula 2, 0 < **a** < 1, **b** + **c** + **e** = 1; 0 < **b** < 1, 0 < **e** < 0.1; 0 ≤ **d** ≤ 0.1, **Me** may be one or more metals selected from the group consisting of Ti, V, Cr, Mn, Fe, Co, Ni, Cu, Al, Mg, Zr, and B (boron), and **M'** may be one or more metals selected from the group consisting of Mo, W, Ir, Ni, and Mg. In certain embodiments, 0 < **a** < 0.33.

In certain embodiments, the core may include any compound represented by Formulae 3 through 7 below:

Formula 3 LiₓCo_{1-y}**M_{y}**O_{2-α}**X_{α}**

Formula 4 LiₓCo_{1-y-z}Ni_{y}**M_{z}**O_{2-α}**X_{α}**

Formula 5 LiₓMn_{2-y}**M_{y}**O_{4-α}**X_{α}**

Formula 6 LiₓCo_{2-y}**M_{y}**O_{4-α}**X_{α}**

Formula 7 Liₓ**Me_{y}M_{z}**PO_{4-α}**X_{α}**

In Formulae 3 through 7 above, 0.90 ≤ **x** ≤ 1.1, 0 ≤ **y** ≤ 0.9, 0 ≤ **z** ≤ 0.5, 1-**y-z** > 0, 0 ≤ **α** ≤ 2, **Me** is one or more metals selected from the group consisting of Ti, V, Cr, Mn, Fe, Co, Ni, Cu, Al, Mg, Zr, and B (boron), **M** is one or more elements selected from the group consisting of Mg, Ca, Sr, Ba, Ti, Zr, Nb, Mo, W, Zn, Al, Si, Ni, Mn, Cr, Fe, Mg, Sr, V, and a rare earth element, and **X** is one or more elements selected from the group consisting of O (oxygen), F (fluorine), S (sulfur), and P (phosphorus).

In certain embodiments, the core may include any compound represented by Formulae 8 and 9 below:

Formula 8 **p**Li₂MO₃-(1-**p**)LiMeO₂

Formula 9 **x**Li₂MO₃-**y**LiMeO₂-**z**Li_{1+d}**M'**_{2-**d**}O₄

In Formulae 8 and 9 above, 0 < **p** < 1, **x+y+z** = 1; 0 < **x** < 1, 0 < **y** < 1, 0 < **z** < 1; 0 ≤ **d** ≤ 0.33, **M** is one or more metals selected from the group consisting of Mg, Ca, Sr, Ba, Ti, Zr, Nb, Mo, W, Zn, Al, Si, Ni, Mn, Cr, Fe, Mg, Sr, V, and a rare earth element, **Me** is one or more metals selected from the group consisting of Ti, V, Cr, Mn, Fe, Co, Ni, Cu, Al, Mg, Zr, B, and a rare earth element, **M'** is one or more metals selected from the group consisting of Ti, V, Cr, Mn, Fe, Co, Ni, Cu, Al, Mg, Zr, and B (boron).

In certain embodiments, a compound of Formula 8 may include a layered structure, and a compound of Formula 9 may include Li₂**M**O₃-LiMeO₂ of a layered structure and Li₁₊ₐ**M'**₂₋ₐO₄ of a spinel structure.

An electrode according to another embodiment of the present disclosure may include a composite electrode active material as disclosed and described herein. The electrode may be a positive electrode or a negative electrode.

In certain embodiments, the positive electrode may be prepared as follows.

A composite positive electrode active material, a conducting agent, a binder, and a solvent are mixed to prepare a positive electrode active material composition. The composite positive electrode active material includes core particles containing a positive electrode active material and a coating layer, containing a porous carbonaceous material, formed on the core particles. The positive electrode active material composition is directly coated on an aluminum current collector and dried to form a positive electrode active material film formed on a positive electrode plate. In certain embodiments, the positive electrode active material composition may be cast on a separate support to form a positive electrode active material film, which is then separated from the support and laminated on an aluminum current collector to prepare a positive electrode plate with the positive electrode active material layer.

In certain embodiments, the conducting agent may be carbon black, graphite particulates, natural graphite, artificial graphite, acetylene black, Ketjen black, carbon fibers, metallic materials, such as copper, nickel, aluminum, silver, and the like, in powder, fiber, or tube form, or a conductive polymer such as polyphenylene derivatives, but is not limited thereto. Any appropriate conducting agent available in the art may be used.

In certain embodiments, the binder may be a vinylidene fluoride/hexafluoropropylene copolymer, polyvinylidene fluoride (PVDF), polyacrylonitrile, polymethylmethacrylate, polytetrafluoroethylene, mixtures thereof, or a styrene butadiene rubber polymer, but is not limited thereto. In certain embodiments, the solvent may include N-methylpyrrolidone (NMP), acetone, or water. Any appropriate solvent available for these purposes in the art may be used. The amounts of the positive electrode active material, the conducting agent, the binder, and the solvent are those levels that are generally used in the manufacture of a lithium battery.

In certain embodiments, the negative electrode may be prepared in the same manner as the positive electrode, except for using a negative active material, instead of the positive electrode active material.

In certain embodiments, the negative electrode may be prepared as follows.

A composite negative electrode active material, a conducting agent, a binder, and a solvent are mixed to prepare a negative electrode active material composition. The composite negative electrode active material includes core particles containing a negative electrode active material and a coating layer, containing a porous carbonaceous material, formed on the core particles. In certain embodiments, the composite negative electrode active material may be then directly coated on a copper current collector, thereby manufacturing a negative electrode plate. In certain embodiments, the negative electrode active material composition may be cast on a separate support, and then a negative electrode active material film separated from the support may be laminated on a copper current collector to prepare a negative electrode plate.

In certain embodiments, a conducting agent, a binder, and a solvent used to prepare a negative electrode active material composition may be the same as those used in the positive electrode active material composition. In certain embodiments, a plasticizer may be further added into the positive electrode active material composition or the negative electrode active material composition to form pores in the positive or negative electrode plate.

The amounts of the negative electrode active material, the conducting agent, the binder, and the solvent are those levels that are generally used in the manufacture of a lithium battery. One or more of the conducting agent, the binder and the solvent may not be used according to the use and the structure of the lithium battery.

A lithium battery according to another embodiment of the present invention includes the positive and/or negative electrode. In certain embodiments, the lithium battery may be prepared as follows.

First, as described above, a positive electrode and/or a negative electrode according to an embodiment of the present invention may be prepared. One or more of the positive and negative electrodes may include a composite electrode active material, which includes a core capable of intercalating and deintercalating of lithium ions and a coating layer, containing a porous carbonaceous material, formed on the core.

Next, a separator to be disposed between the positive electrode and the negative electrode may be prepared. In certain embodiments, the separator for the lithium battery may be any separator that is commonly used in lithium batteries. In certain embodiments, the separator may have low resistance to migration of ions in an electrolyte and have an excellent electrolyte-retaining ability. In certain embodiments, the separator may be selected from glass fiber, polyester, polyethylene, polypropylene, polytetrafluoroethylene (PTFE), and a combination thereof, each of which may be a non-woven or woven fabric. In certain embodiments, a rollable separator including polyethylene or polypropylene may be used for a lithium ion battery. A separator with a good organic electrolyte solution-retaining ability may be used for a lithium ion polymer battery. In certain embodiments, the separator may be manufactured in the following manner.

A polymer resin, a filler, and a solvent may be mixed together to prepare a separator composition. In certain embodiments, the separator composition may be then directly coated on an electrode, and then dried to form the separator. In certain embodiments, the separator composition may be cast on a support and then dried to form a separator film, which may then be separated from the support and laminated on an electrode to form the separator.

In certain embodiments, the polymer resin used to manufacture the separator may be any material that is commonly used as a binder for electrode plates. In certain embodiments, the polymer resin may be a vinylidenefluoride/hexafluoropropylene copolymer, polyvinylidene fluoride (PVDF), polyacrylonitrile, polymethylmethacrylate, or a mixture thereof.

Next, an electrolyte is prepared.

In certain embodiments, the electrolyte may be an organic electrolyte solution. In certain embodiments, the electrolyte may be in a solid phase. In certain embodiments, the electrolyte may be a boron oxide or a lithium oxynitride, but is not limited thereto. Any material available as a solid electrolyte in the field of the art may be used. In certain embodiments, the solid electrolyte may be formed on the negative electrode by, for example, sputtering.

In some embodiments, an organic electrolyte solution may be prepared as follows. The organic electrolyte solution may be prepared by dissolving a lithium salt in an organic solvent.

In certain embodiments, the organic solvent may be any appropriate solvent available as an organic solvent in the art. In certain embodiments, the organic solvent may be propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxorane, 4-methyldioxorane, N,N-dimethyl formamide, dimethyl acetamide, dimethylsulfoxide, dioxane, 1,2-dimethoxyethane, sulforane, dichloroethane, chlorobenzene, nitrobenzene, diethylene glycol, dimethyl ether, or mixtures thereof.

In certain embodiments, the lithium salt may be any material available as a lithium salt in the art. In certain embodiments, the lithium salt may be LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (wherein x and y are each independently 1 to 20), LiCl, LiI, or a mixture thereof.

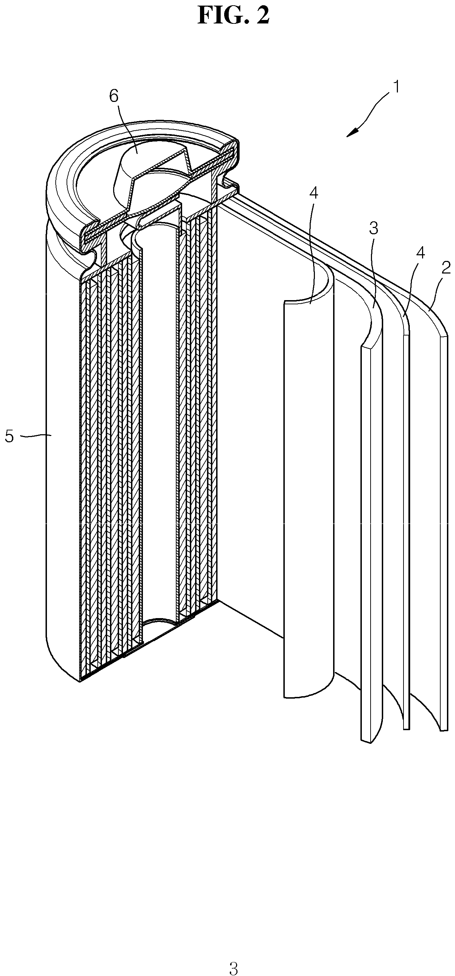

Referring to FIG. 2, a lithium battery **1** includes a positive electrode **3,** an negative electrode **2,** and a separator **4.** In certain embodiments, the positive electrode **3,** the negative electrode **2** and the separator **4** may be wound or folded, and then sealed in a battery case **5.** In certain embodiments, the battery case **5** may be filled with an organic electrolyte solution and sealed with a cap assembly **6,** thereby completing the manufacture of the lithium battery **1.** In certain embodiments, the battery case **5** may be a cylindrical type, a rectangular type, or a thin-film type. In certain embodiments, the lithium battery may be a thin-film type battery. In certain embodiments, the lithium battery may be a lithium ion battery.

In certain embodiments, the separator may be interposed between the positive electrode and the negative electrode to form a battery assembly. In certain embodiments, the battery assembly may be stacked in a bi-cell structure and impregnated with the electrolyte solution. In certain embodiments, the resultant battery assembly may be put into a pouch and hermetically sealed, thereby completing the manufacture of a lithium ion polymer battery.

In certain embodiments, a plurality of battery assemblies may be stacked to form a battery pack, which may be used in any device that operates at high temperatures and requires high output, for example, in a laptop computer, a smart phone, an electric vehicle, and the like.

In certain embodiments, the lithium battery may have storage stability at a high temperature, excellent lifespan and high-rate characteristics and thus may be applicable in an electric vehicle (EV), for example, in a hybrid vehicle such as a plug-in hybrid electric vehicle (PHEV).

Some embodiments provide a method of preparing a composite electrode active material by mixing a core capable of intercalating and deintercalating lithium ions and a porous carbonaceous material, and forming a coating layer containing a porous carbonaceous material on the core.

In certain embodiments, the coating layer in a composite electrode active material may be prepared using a dry coating method or a wet coating method.

The dry coating method includes all methods of forming a coating layer by applying mechanical energy to a mixture of a core including an electrode active material and a porous carbonaceous material without using a solvent.

In certain embodiments, the dry coating method may be a) a method of forming a coating layer by attaching a powder of a covering material, for example a porous carbonaceous material, on a surface of core particle using a low speed rotation ball mill , thereby contacting the covering material particles with the surface of the core particle and simultaneously cohering the attached particles of the covering material one another, b) a method of combining a core and covering material particles by confining the covering material particles on a surface of the core using a movement of grinding media or rotator contained inside a device and at the same time, mechanically combining the covering material particles on the core particle by using stress accompanied on the covering material particles or by softening or melting coating layers of the covering material particles on the core particle with heat that is generated by the stress, or c) a method of partially or completely melting a coating layer and the core by heat treating the core and the coating layer formed thereon using the a) and/or b) method and then cooling the resultant again. However, the method is not limited thereto, and any dry coating method available in the field of the art may be used.

In certain embodiments, the dry coating method may be one method selected from the group consisting of a planetary ball mill method, a low speed ball mill method, a high speed ball mill method, a hybridization method, and a mechanofusion method. In certain embodiments, a mechanofusion method may be used. A mechanofusion method is a method of adding a mixture into a rotating container, fixing the mixture on an inner wall of the container using centrifugal force, and compressing the mixture into a gap between the inner wall of the container and an arm head. A mechanofusion method corresponds to the b) method.

After forming the coating layer using the dry coating method, heat treating the formed resultant may be further performed. Then, the coating layer may be firmer by the heat treating.

In certain embodiments, the wet coating method may include a spray drying method. A coating layer may be partially or completely formed on the core using a spray drying method. A spray drying method is a method of spraying and drying a mixture including a core capable of intercalating and deintercalating lithium ions and the porous carbonaceous material at a high temperature simultaneously. Conditions for the spray drying method may be adjusted within ranges in which a firm coating layer may be obtained.

In certain embodiments, a content of the porous carbonaceous material may be 10 wt % or less based on the total weight of the core and the porous carbonaceous material in the method of preparing the coating layer. In certain embodiments, the content may be more than about 0 wt % to about 10 wt %. In certain embodiments, the content may be more than about 0 wt % to about 5 wt %.

Hereinafter, exemplary embodiments of the present embodiments will be described in detail with reference to the following examples. However, these examples are not intended to limit the scope of the one or more embodiments of the present embodiments.

As Preparation Example 1, a 10 wt % polyacrylonitrile solution was prepared by combining polyacrylonitrile with dimethylformaldehyde. A polyacrylonitirle-silica solution was prepared by adding a silica (SiO₂) powder to the 10 wt % polyacrylonitrile solution in the same weight as the polyacrylonitrile. The solution was sufficiently agitated, and carbon fibers were prepared by electrostatic spinning.

The prepared carbon fibers were oxidized at 250°C for about 5 hours to stabilize a polyacrylonitrile structure, i.e., an oxygen stabilization step was performed. The resultant material obtained from the oxygen stabilization step was impregnated with HF acid and maintained for 24 hours to remove silica from the carbon fibers. The carbon fibers, in which the silica was removed, were heated in a nitrogen atmosphere at 1,000°C for one hour to prepare porous carbon fibers.

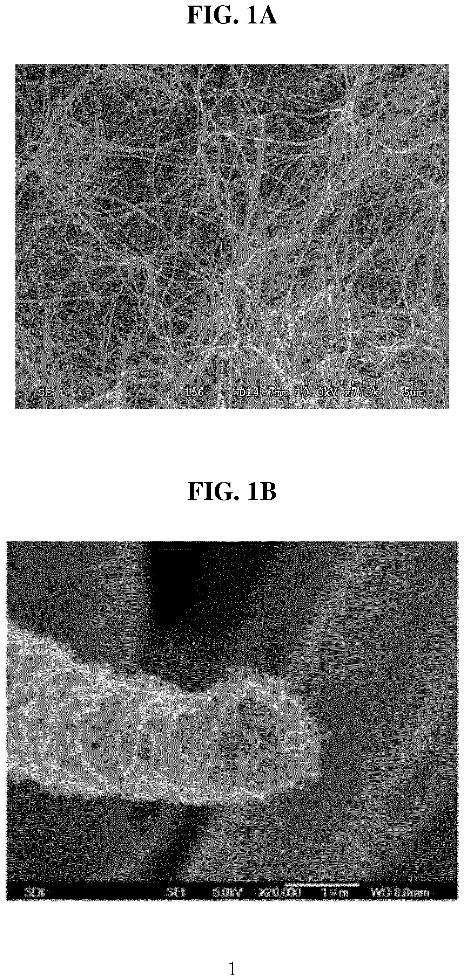

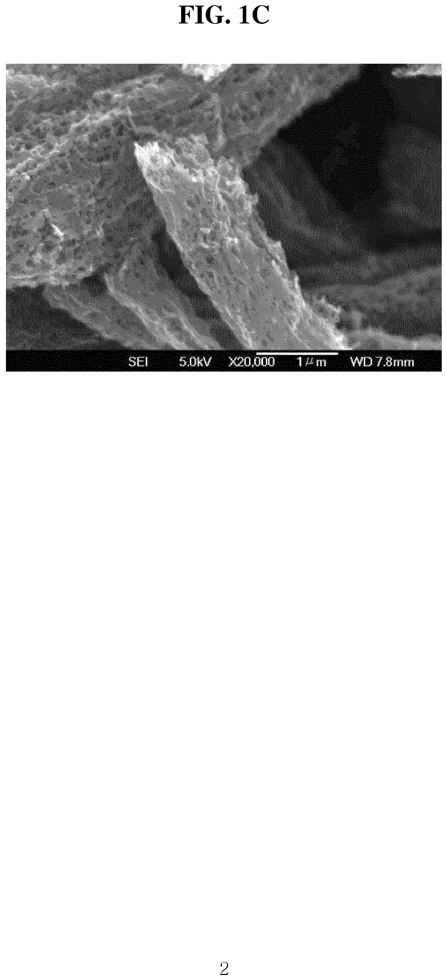

FIGS. 1A through 1C are scanning electron microscope (SEM) images of the prepared porous carbon fibers.

A mixture (example 1) was prepared by combining 2 parts by weight of the porous carbon fibers prepared in Preparation Example 1 with 85 parts by weight of soft carbon (GS-Caltex Corp., Korea) having an average particle diameter of 10 µm. The mixture was put into a dry coating system (a mechanofusion device, Hosokawa Micron Corp., Japan, Nobita-130) with a rotation speed of 1500 rpm for 20 minutes to prepare a composite negative electrode active material including a soft carbon core and a porous coating layer formed on the core.

As example 2, a composite negative electrode active material was prepared in the same manner as Example 1, except that 4 parts by weight of the porous carbon fibers were mixed with 85 parts by weight of the soft carbon.

For example 3, to isopropyl alcohol (1000 mL) were added 85 parts by weight of soft carbon (GS-Caltex Corp., Korea), 2 parts by weight of the porous carbon fibers prepared in Preparation Example 1, and 1 part by weight of polyvinylidenefluoride (PVDF), and the resultant was mixed and dispersed. The mixture was dried using a spray dryer. While the mixture was spray dried, a temperature inside the spray dryer was maintained at 70°C, and a rotation speed of an atomizer was maintained at 1000 rpm to prepare a composite negative electrode active material including a soft carbon core and a porous coating layer formed on the core.

As example 4, a composite negative electrode active material was prepared in the same manner as Example 3, except that 4 parts by weight of activated carbon was mixed with 85 parts by weight of the soft carbon.

As example 5, a mixture was prepared by combining 2 parts by weight of the porous carbon fibers prepared in Preparation Example 1 with 93 parts by weight of graphite (Mitsubishi Chemical, Japan) having an average particle diameter of 10 µm. The mixture was put into a dry coating system (a mechanofusion device, Hosokawa Micron Corp., Japan, Nobita-130) with a rotation speed of 1500 rpm for 20 minutes to prepare a composite negative electrode active material including a graphite core and a porous coating layer formed on the core.

As Comparative Example 1, soft carbon (available from GS-Caltex) having an average particle diameter of 10 µm was obtained and used without further processing.

As Comparative Example 2, graphite (Mitsubishi Chemical, Japan) having an average particle diameter of 10 µm was obtained and used without further processing.

As example 6, a mixture was made by combining 1 part by weight of the porous carbon fibers prepared in Preparation Example 1 with 85 parts by weight of LiCoO₂. The mixture was put into a dry coating system (a mechanofusion device, available from Hosokawa Micron Corp., Japan, Nobita-130) with a rotation speed of 1500 rpm for 20 minutes to prepare a composite positive electrode active material including a LiCoO₂ core and a porous coating layer formed in the core.

As, example 7, a composite positive electrode active material was prepared in the same manner as Example 6, except that 3 parts by weight of the porous carbon fibers were mixed with 85 parts by weight of LiCoO₂.

As example 8, a slurry was prepared by mixing a powder of the composite negative electrode active material prepared in Example 1, a carbon black (Denki Kagaku Kogyo, Japan) conducting agent, and a PVDF binder in a N-methylpyrrolidone solvent to have a weight ratio of 87:3:10.

Next, the active material slurry was coated to a thickness of 90 µm on a Cu foil with a thickness of 10 µm, dried at a temperature of 135 for 3 hours, and then, pressed to a thickness of 70 µm to prepare a negative electrode plate. Then, a CR2016 type coin cell with a diameter of 32 mm was prepared.

When the cell was prepared, a lithium metal was used as a counter electrode, a polyethylene separator (Asahi Kasei, Japan, Star^{®} 20) with a thickness of 20 µm was used as a separator, and a solution of 1.15 M of LiPF₆ dissolved in a mixture solvent of ethylenecarbonate (EC), ethylmethylcarbonate (EMC), and diethylcarbonate (DEC) having a volume ratio of 3:3:4 was used as an electrolyte.

As example 9, a lithium battery was prepared in the same manner as in Example 8, except that a slurry was prepared by mixing a powder of the composite negative electrode active material prepared in Example 2, a carbon black (Denki Kagaku Kogyo, Japan) conducting agent, and a PVDF binder in a N-methylpyrrolidone solvent to have a weight ratio of 89:1:10.

As example 10, a lithium battery was prepared in the same manner as in Example 8, except that a slurry was prepared by mixing a powder of the composite negative electrode active material prepared in Example 3, a carbon black (Denki Kagaku Kogyo, Japan) conducting agent, and a PVDF binder in a N-methylpyrrolidone solvent to have a weight ratio of 87:3:10.

As example 11, a lithium battery was prepared in the same manner as in Example 8, except that a slurry was prepared by mixing a powder of the composite negative electrode active material prepared in Example 4, a carbon black (Denki Kagaku Kogyo, Japan) conducting agent, and a PVDF binder in a N-methylpyrrolidone solvent to have a weight ratio of 89:1:10.

As example 12, a lithium battery was prepared in the same manner as in Example 8, except that a slurry was prepared by mixing a powder of the composite negative electrode active material prepared in Example 5, a carbon black (Denki Kagaku Kogyo, Japan) conducting agent, and a PVDF binder in a N-methylpyrrolidone solvent to have a weight ratio of 95:0:5.

As Comparative Examples 3 and 4, Lithium batteries were prepared in the same manner as in Example 15, except that each of the powders of the negative electrode active materials prepared in Comparative Examples 1 and 2 was used, respectively.

As example 13, a slurry was prepared by mixing a powder of the composite positive electrode active material prepared in Example 6, a carbon black (Denki Kagaku Kogyo, Japan) conducting agent, and a PVDF binder in a N-methylpyrrolidone solvent to have a weight ratio of 86:4:10.

Next, the active material slurry was coated to a thickness of 90 µm on an Al foil with a thickness of 10 µm, dried at a temperature of 135 for 3 hours, and then, pressed to a thickness of 70 µm to prepare a positive electrode plate. Then, a CR2016 type coin cell with a diameter of 32 mm was prepared.

When the cell was prepared, a lithium metal was used as a counter electrode, a polyethylene separator (Asahi Kasei, Japan, Star^{®} 20) with a thickness of 20 µm was used as a separator, and a solution of 1.15 M of LiPF₆ dissolved in a mixture solvent of EC, EMC, and DEC having a volume ratio of 3:3:4 was used as an electrolyte.

As example 14, a lithium battery was prepared in the same manner as in Example 13, except that a slurry was prepared by mixing a powder of the composite positive electrode active material prepared in Example 7, a carbon black (Denki Kagaku Kogyo, Japan) conducting agent, and a PVDF binder in a N-methylpyrrolidone solvent to have a weight ratio of 88:2:10.

As Comparative Example 6, a lithium battery was prepared in the same manner as in Example 13, except that the powder of the positive electrode active material prepared in Comparative Example 3 was used.

Nitrogen adsorption experiments were performed on the powders of the composite electrode active materials prepared in Examples 1 to 7 and Comparative Examples 1 to 3. The results are shown in Table 1 below.

In the nitrogen adsorption experiments, nitrogen was adsorbed and desorbed in each of the materials having pores, and a BET specific surface area of the powder of the negative electrode active material was calculated from the difference in amount of adsorbed nitrogen and amount of desorbed nitrogen.

**Table 1**

| | BET specific surface area [m²/g] |
|---|---|
| Example 1 | 10.7 |
| Example 2 | 17.4 |
| Example 3 | 11.2 |
| Example 4 | 19.1 |
| Example 5 | 8.7 |
| Example 6 | 6.7 |
| Example 7 | 12.1 |
| Comparative Example 1 | 4.2 |
| Comparative Example 2 | 2.9 |
| Comparative Example 3 | 0.34 |

As shown in Table 1, the composite electrode active materials of Examples 1 to 7 showed increased specific surface areas compared to the electrode active materials of Comparative Examples 1 to 3.

Discharge capacities according to an increase in current density during discharging were measured while the coin cells prepared in Examples 8 to 12 and Comparative Examples 4 to 5 were charged at a 0.2 C constant current rate in a voltage range of about 0.01 V to about 1.5 V with respect to lithium metal at room temperature, and the results are shown in Table 2 below. Current densities during discharging were at 0.2 C, 1 C, 10 C, and 20 C rates, respectively.

**Table 2**

| | 0.2 C [mAh/g] | 1 C [mAh/g] | 10 C [mAh/g] | 20 C [mAh/g] |
|---|---|---|---|---|
| Example 8 | 252 | 248 | 241 | 202 |
| Example 9 | 251 | 248 | 238 | 198 |
| Example 10 | 257 | 251 | 243 | 211 |
| Example 11 | 254 | 248 | 240 | 206 |
| Example 12 | 334 | 287 | 94 | 58 |
| Comparative Example 4 | 246 | 238 | 206 | 187 |
| Comparative Example 5 | 331 | 258 | 15 | 4 |

As shown in Table 2, high-rate characteristics of the lithium batteries of Examples 8 to 12 were enhanced in comparison with the lithium battery of Comparative Example 4.

Evaluation Example 2: Evaluation of high-rate characteristics (batteries including composite positive electrode active materials)

Discharge capacities according to an increase in current density during discharging were measured while the coin cells prepared in Examples 13 to 14 and Comparative Example 6 were charged at a 0.2 C constant current rate in a voltage range of about 3.0 V to about 4.3 V with respect to lithium metal at room temperature, and the results are shown in Table 3 below. Current densities during discharging were at 0.2 C, 1 C, 10 C, and 20 C rates, respectively.

**Table 3**

| | 0.2C [mAh/g] | 1C [mAh/g] | 10C [mAh/g] | 20C [mAh/g] |
|---|---|---|---|---|
| Example 13 | 242 | 237 | 222 | 202 |
| Example 14 | 240 | 234 | 225 | 205 |
| Comparative Example 6 | 240 | 234 | 209 | 176 |

As shown in Table 3, high-rate characteristics of the lithium batteries of Examples 13 to 14 were enhanced in comparison with the lithium battery of Comparative Example 6.

As described above, high-rate characteristics and lifespan of a lithium battery may be improved by using a composite electrode active material of the present embodiments.

It should be understood that the exemplary embodiments described herein should be considered in a descriptive sense only and not for purposes of limitation. Descriptions of features or aspects within each embodiment should typically be considered as available for other similar features or aspects in other embodiments. It will be understood by those of ordinary skill in the art that various changes in form and details may be made therein without departing from the scope of the present embodiments as defined by the following claims.

## Claims

1. A composite electrode active material comprising:
core particles capable of intercalating and deintercalating lithium; and
a coating layer formed on at least a part of a surface of the core particles, wherein the coating layer comprises a porous carbonaceous material, wherein the porous carbonaceous material has a fiber shape, wherein the carbonaceous material comprises nano-sized pores therein,
wherein a diameter of the core particle is 1 µm to 50 µm,
wherein a content of the porous carbonaceous material is about 0.1 wt % to about 20 wt % based on the total weight of the composite electrode active material.

2. The composite electrode active material of claim 1, wherein a BET specific surface area of the porous carbonaceous material is 3 times or more greater than that of the core; optionally wherein a BET specific surface area of the porous carbonaceous material is about 3 times to 1500 times greater than that of the core.

3. The composite electrode active material of claim 1 or 2, wherein a BET specific surface area of the porous carbonaceous material is from about 10 m²/g to about 2500 m²/g.

4. The composite electrode active material of any preceding claim, wherein the carbonaceous material comprises a plurality of irregular pores therein.

5. The composite electrode active material of any preceding claim, wherein the porous carbonaceous material comprises porous carbon fibers.

6. The composite electrode active material of any preceding claim, wherein the core particles further comprise a carbonaceous material; optionally wherein the core particles are formed from at least one component selected from the group consisting of natural graphite, artificial graphite, soft carbon, and hard carbon.

7. The composite electrode active material of any one of claims 1 to 5, wherein the core particles comprise a lithium transition metal oxide.

8. An electrode comprising the composite electrode active material according to any one of claims 1 to 7.

9. A lithium battery comprising the electrode of claim 8; and a separator.

10. A method of preparing a composite electrode active material comprising:
preparing a mixture by mixing core particles capable of intercalating and deintercalating lithium and a porous carbonaceous material; and
forming a coating layer comprising the porous carbonaceous material on at least a part of the surface of the core particles;
wherein the porous carbonaceous material has a fiber shape, wherein the carbonaceous material comprises nanosized pores therein,
wherein the porous carbonaceous material is prepared by:
preparing a polyacrylonitrile solution by combining polyacrylonitrile with dimethylformaldehyde;
preparing a polyacrylonitirle-silica solution by adding a silica (SiO₂) powder to the polyacrylonitrile solution;
agitating the polyacrylonitirle-silica solution;
preparing a carbon fibers by electrostatic spinning;
oxidizing the carbon fibers at 250°C for about 5 hours to stabilize the carbon fibers;
impregnating the carbon fibers with HF acid and maintained for 24 hours to remove silica from the carbon fibers; and
heating the carbon fibers in a nitrogen atmosphere at 1,000°C for one hour to prepare porous carbon fibers.

11. The method of claim 10, wherein the coating layer is formed using a dry coating method or a wet coating method.

12. The method of claim 11, wherein the coating layer is formed using a method selected from the group consisting of a planetary ball mill method, a low speed ball mill method, a high speed ball mill method, a hybridization method, and a mechanofusion method.

13. The method of any one of claims 10 to 12, wherein a content of the porous carbonaceous material is 10 wt % or less based on the total weight of the mixture.

## Patentansprüche

1. Verbundstoff-Elektrodenaktivmaterial, umfassend:
Kernpartikel, die in der Lage sind, Lithium zu interkalieren und zu deinterkalieren; und
eine Beschichtungsschicht, die auf mindestens einem Teil einer Oberfläche der Kernpartikel ausgebildet ist, wobei die Beschichtungsschicht ein poröses kohlenstoffhaltiges Material umfasst, wobei das poröse kohlenstoffhaltige Material eine Faserform aufweist, wobei das kohlenstoffhaltige Material darin Poren in Nanogröße umfasst,
wobei ein Durchmesser des Kernpartikels 1 µm bis 50 µm beträgt,
wobei ein Gehalt des porösen kohlenstoffhaltigen Materials etwa 0,1 Gew.-% bis etwa 20 Gew.-% basierend auf dem Gesamtgewicht des Verbundstoff-Elektrodenaktivmaterials beträgt.

2. Verbundstoff-Elektrodenaktivmaterial nach Anspruch 1, wobei ein spezifischer BET-Oberflächenbereich des porösen kohlenstoffhaltigen Materials mindestens dreimal größer ist als derjenige des Kerns; wobei optional ein spezifischer BET-Oberflächenbereich des porösen kohlenstoffhaltigen Materials etwa dreimal bis 1500-mal größer ist als derjenige des Kerns.

3. Verbundstoff-Elektrodenaktivmaterial nach Anspruch 1 oder 2, wobei ein spezifischer BET-Oberflächenbereich des porösen kohlenstoffhaltigen Materials von etwa 10 m²/g bis etwa 2500 m²/g beträgt.

4. Verbundstoff-Elektrodenaktivmaterial nach einem vorhergehenden Anspruch, wobei das kohlenstoffhaltige Material eine Vielzahl unregelmäßiger Poren darin umfasst.

5. Verbundstoff-Elektrodenaktivmaterial nach einem vorhergehenden Anspruch, wobei das poröse kohlenstoffhaltige Material poröse Kohlenstofffasern umfasst.

6. Verbundstoff-Elektrodenaktivmaterial nach einem vorhergehenden Anspruch, wobei die Kernpartikel ferner ein kohlenstoffhaltiges Material umfassen; wobei die Kernpartikel optional aus mindestens einer Komponente ausgebildet sind, die aus der Gruppe ausgewählt ist, die aus natürlichem Graphit, künstlichem Graphit, Weichkohlenstoff und Hartkohlenstoff besteht.

7. Verbundstoff-Elektrodenaktivmaterial nach einem der Ansprüche 1 bis 5, wobei die Kernpartikel ein Lithium-Übergangsmetalloxid umfassen.

8. Elektrode, das Verbundstoff-Elektrodenaktivmaterial nach einem der Ansprüche 1 bis 7 umfassend.

9. Lithiumbatterie, umfassend die Elektrode nach Anspruch 8; und einen Separator.

10. Verfahren zum Herstellen eines Verbundstoff-Elektrodenaktivmaterials, umfassend:
Herstellen einer Mischung durch Mischen von Kernpartikeln, die in der Lage sind, Lithium zu interkalieren und zu deinterkalieren, und einem porösen kohlenstoffhaltigen Material; und
Ausbilden einer Beschichtungsschicht, die das poröse kohlenstoffhaltige Material umfasst, auf mindestens einem Teil der Oberfläche der Kernpartikel;
wobei das poröse kohlenstoffhaltige Material eine Faserform aufweist, wobei das kohlenstoffhaltige Material Poren in Nanogröße darin umfasst,
wobei das poröse kohlenstoffhaltige Material durch Folgendes hergestellt wird:
Herstellen einer Polyacrylnitrillösung durch Kombinieren von Polyacrylnitril mit Dimethylformaldehyd;
Herstellen einer Polyacrylnitril-Siliciumdioxid-Lösung durch Hinzufügen eines Siliciumdioxid(SiO₂)-Pulvers zur Polyacrylnitril-Lösung;
Rühren der Polyacrylnitril-Siliciumdioxid-Lösung;
Herstellen von Kohlenstofffasern durch elektrostatisches Spinnen;
Oxidieren der Kohlenstofffasern bei 250 °C für etwa 5 Stunden, um die Kohlenstofffasern zu stabilisieren;
Imprägnieren der Kohlenstofffasern mit HF-Säure und Halten für 24 Stunden, um Siliciumdioxid aus den Kohlenstofffasern zu entfernen; und
Erhitzen der Kohlenstofffasern eine Stunde lang in einer Stickstoffatmosphäre bei 1.000 °C, um poröse Kohlenstofffasern herzustellen.

11. Verfahren nach Anspruch 10, wobei die Beschichtungsschicht unter Verwendung eines Trockenbeschichtungsverfahrens oder eines Nassbeschichtungsverfahrens ausgebildet wird.

12. Verfahren nach Anspruch 11, wobei die Beschichtungsschicht unter Verwendung eines Verfahrens ausgebildet wird, das aus der Gruppe ausgewählt ist, die aus einem Planetenkugelmühlenverfahren, einem Kugelmühlenverfahren mit niedriger Geschwindigkeit, einem Kugelmühlenverfahren mit hoher Geschwindigkeit, einem Hybridisierungsverfahren und einem Mechanofusionsverfahren besteht.

13. Verfahren nach einem der Ansprüche 10 bis 12, wobei ein Gehalt des porösen kohlenstoffhaltigen Materials 10 Gew.-% oder weniger beträgt, basierend auf dem Gesamtgewicht der Mischung.

## Revendications

1. Matériau actif d'électrode composite comprenant :
des particules de cœur pouvant intercaler et désintercaler du lithium ; et
une couche de revêtement formée sur au moins une partie d'une surface des particules de cœur, ladite couche de revêtement comprenant un matériau carboné poreux, ledit matériau carboné poreux comportant une forme de fibre, ledit matériau carboné comprenant des pores de taille nanométrique en son sein,
le diamètre de la particule de cœur faisant 1 µm à 50 µm,
la teneur du matériau carboné poreux étant d'environ 0,1 % en poids à environ 20 % en poids par rapport au poids total du matériau actif d'électrode composite.

2. Matériau actif d'électrode composite selon la revendication 1, la surface spécifique BET du matériau carboné poreux étant au moins 3 fois plus grande que celle du cœur ; éventuellement ladite surface spécifique BET du matériau carboné poreux étant environ 3 fois à 1500 fois plus grande que celle du cœur.

3. Matériau actif d'électrode composite selon la revendication 1 ou 2, la surface spécifique BET du matériau carboné poreux étant d'environ 10 m²/g à environ 2500 m²/g.

4. Matériau actif d'électrode composite selon l'une quelconque des revendications précédentes, ledit matériau carboné comprenant une pluralité de pores irréguliers en son sein.

5. Matériau actif d'électrode composite selon l'une quelconque des revendications précédentes, ledit matériau carboné poreux comprenant des fibres de carbone poreuses.

6. Matériau actif d'électrode composite selon l'une quelconque des revendications précédentes, lesdites particules de cœur comprenant en outre un matériau carboné ; éventuellement lesdites particules de cœur étant formées d'au moins un composant choisi dans le groupe constitué par le graphite naturel, le graphite artificiel, le carbone souple et le carbone dur.

7. Matériau actif d'électrode composite selon l'une quelconque des revendications 1 à 5, lesdites particules de cœur comprenant un oxyde de métal de transition au lithium.

8. Electrode comprenant le matériau actif d'électrode composite selon l'une quelconque des revendications 1 à 7.

9. Batterie au lithium comprenant l'électrode selon la revendication 8 ; et un séparateur.

10. Procédé de préparation d'un matériau actif d'électrode composite comprenant :
la préparation d'un mélange en mélangeant des particules de cœur pouvant intercaler et désintercaler du lithium et un matériau carboné poreux ; et
la formation d'une couche de revêtement comprenant le matériau carboné poreux sur au moins une partie de la surface des particules de cœur ;
ledit matériau carboné poreux comportant une forme de fibre, ledit matériau carboné poreux comprenant des pores de taille nanométrique en son sein,
ledit matériau carboné poreux étant préparé par :
préparation d'une solution de polyacrylonitrile en combinant du polyacrylonitrile à du diméthylformaldéhyde ;
préparation d'une solution de polyacrilonitirle-silice en ajoutant une poudre de silice (SiO₂) à la solution de polyacrylonitrile ;
agitation de la solution de polyacrilonitirle-silice ;
préparation de fibres de carbone par filage électrostatique ;
oxydation des fibres de carbone à 250°C pendant environ 5 heures pour stabiliser les fibres de carbone ;
imprégnation des fibres de carbone avec de l'acide HF et maintien pendant 24 heures pour enlever la silice des fibres de carbone ; et
chauffage des fibres de carbone sous atmosphère d'azote à 1 000°C pendant une heure pour préparer des fibres de carbone poreuses.

11. Procédé selon la revendication 10, ladite couche de revêtement étant formée en utilisant un procédé d'enduction à sec ou un procédé d'enduction par voie humide.

12. Procédé selon la revendication 11, ladite couche de revêtement étant formée en utilisant un procédé choisi dans le groupe constitué par un procédé de broyage planétaire à boulets, un procédé de broyage à boulets à faible vitesse, un procédé de broyage à boulets à haute vitesse, un procédé d'hybridation et un procédé de mécanofusion.

13. Procédé selon l'une quelconque des revendication 10 à 12, la teneur du matériau carboné poreux étant inférieure ou égale à 10 % en poids par rapport au poids total du mélange.
